# FASCICULE DE BREVET EUROPEEN

(11) **EP 0 490 443 B1**
(45) Date de publication et mention de la délivrance du brevet: **22.06.1994**
(21) Numéro de dépôt: 91203200.0
(22) Date de dépôt: 09.12.1991
(51) Int. Cl.: F16C 17/12

(54) **Palier hydrodynamique à film fluide**
Hydrodynamisches Gleitlager
Hydrodynamic foil bearing

(30) Priorité: 13.12.1990 FR 9015747
(43) Date de publication de la demande: 17.06.1992
(73) Titulaire: ABG SEMCA S.A., 31016 Toulouse Cédex (FR)
(72) Inventeur: Hermel, Pascal, F-31240 l'Union (FR); Riazuelo, Serge, F-31140 Montbéron (FR); Signoret, Jacques, F-31200 Toulouse (FR)
(74) Mandataire: Barre, Philippe

(56) Documents cités:
- FR-A- 2 516 996
- US-A- 4 208 076
- US-A- 4 274 683
- US-A- 4 950 089

## Description

L'invention concerne un palier hydrodynamique à film fluide du type comprenant une ou des feuilles minces souples aptes à conditionner la formation d'un film fluide autour d'un arbre rotatif en vue de soutenir celui-ci sans contact avec une surface solide. L'invention s'applique en particulier pour le soutien d'arbres susceptibles de tourner à des vitesses de rotation élevées.

Les paliers hydrodynamiques du type susévoqué sont bien connus. Leurs feuilles minces doivent présenter de bonnes caractéristiques de souplesse afin de se conformer à l'arbre supporté dans toutes les conditions de fonctionnement et de conduire à la formation d'un film fluide approprié. Toutefois, de telles feuilles ont une capacité de support de charge réduite et il est devenu habituel de leur adjoindre des moyens de raidissement qui augmentent la rigidité du palier sous forte charge. De plus, à grandes vitesses, l'arbre tend à vibrer ou osciller autour du centre géométrique du palier avec des amplitudes d'oscillation qui atteignent une valeur maximale à certaines vitesses critiques. Pour maîtriser cette oscillation, certains paliers comportent des moyens d'amortissement qui assurent une dissipation d'énergie par effet de Coulomb. On pourra notamment se reporter aux brevets suivants qui décrivent de tels paliers : US-A- 4.549.821, US-A- 4.701.060, US-A- 4.300.806, US-A- 4.274.683, US-A- 4.153.315, US-A- 3.893.733, FR-A- 2.516.996.

Toutefois, une des difficultés rencontrées est de parvenir à combiner, d'une part, un bon amortissement des oscillations ou vibrations grâce à de fortes dissipations d'énergie, d'autre part, une variation progressive de la raideur du palier permettant un fonctionnement satisfaisant sur toute la plage de vitesses.

L'invention vise à fournir une solution simple à ce problème. Son objectif essentiel est de fournir un palier de structure simple qui conduise, en cas d'oscillations ou vibrations, à des dissipations d'énergie par effet Coulomb notablement accrues par rapport aux paliers connus, tout en présentant une raideur susceptible de varier de façon progressive en fonction de la charge entre une valeur minimale adaptée aux faibles charges, notamment en cours de démarrage, et une valeur maximale adaptée aux fortes charges à vitesse élevée.

A cet effet, le palier visé par l'invention est du type comprenant un fourreau fixe, un arbre rotatif disposé dans ledit fourreau de façon à être séparé de celui-ci par un espace annulaire, et un ou des ensembles de soutien logés dans ledit espace de façon à couvrir la circonférence de celui-ci, chaque ensemble de soutien comprenant la superposition :
. d'une feuille souple interne essentiellement cylindrique, apte à conditionner la formation du film fluide entre l'arbre rotatif et ladite feuille,
. d'un élément-ressort externe présentant une succession d'ondulations à convexité orientée vers le fourreau, dites ondulations centrifuges, et d'ondulations à convexité orientée vers l'arbre rotatif, dites ondulations centripètes, cet élément-ressort externe venant au contact du fourreau par des ondulations centrifuges,
. et d'un élément-ressort intermédiaire, interposé entre la feuille souple interne et l'élément-ressort externe et présentant une succession d'ondulations à convexité orientée vers le fourreau, dites ondulations centrifuges, et d'ondulations à convexité orientée vers l'arbre rotatif, dites ondulations centripètes, cet élément-ressort intermédiaire venant au contact de la feuille souple interne par des ondulations centripètes et au contact de l'élément-ressort externe par des ondulations centrifuges.

Le palier hydrodynamique conforme à la présente invention se caractérise en ce que, pour chaque ensemble de soutien :
. l'élément-ressort externe et l'élément-ressort intermédiaire ont des ondulations agencées en opposition de telle façon que les ondulations centripètes de l'élément-ressort externe soient situées en regard et au contact des ondulations centrifuges de l'élément-ressort intermédiaire,
. l'élément-ressort externe et la feuille souple interne possèdent une extrémité fixée au fourreau et une extrémité libre, et présentent dans l'espace annulaire un même sens d'enroulement depuis leur extrémité fixe vers leur extrémité libre,
. l'élément-ressort intermédiaire possède une extrémité fixée au fourreau et une extrémité libre, et présente dans l'espace annulaire un sens d'enroulement opposé à celui de l'élément-ressort externe et de la feuille souple interne de façon que les déformations de ces trois éléments engendrent des déplacements opposés de leurs zones en contact : ondulations centripètes de l'élément-ressort externe au contact d'ondulations centrifuges de l'élément-ressort intermédiaire d'une part, ondulations centripètes de l'élément-ressort intermédiaire au contact de la feuille souple interne d'autre part.

Par "ondulation", on entend d'une façon générale une déformation de l'élément dans un sens ou dans l'autre par rapport à une surface moyenne cylindrique ; ces ondulations peuvent être courbes sur toute leur surface ou, au contraire, comporter des zones aplaties ou de toutes autres formes. Selon un mode de réalisation préféré :
. les ondulations centrifuges de l'élément-ressort externe au contact du fourreau de même que les ondulations centrifuges de l'élément-ressort intermédiaire au contact de l'élément-ressort externe présentent la forme d'arcs de cercle,
. les ondulations centripètes de l'élément-ressort externe de même que les ondulations centripètes de l'élément-ressort intermédiaire présentent des zones aplaties de contact respectivement avec l'élément-ressort intermédiaire et la feuille souple interne.

Ainsi, dans l'invention, l'élément-ressort intermédiaire remplit une double fonction. En premier lieu, il se déforme sous l'effet d'un accroissement de la charge et s'aplatit pour tendre vers une surface proche de celle d'un cylindre : il assure ainsi une augmentation progressive de la raideur du palier jusqu'à ce que l'élément-ressort externe se déforme à son tour et confère au palier une grande raideur lorsque la charge atteint des valeurs élevées. En outre, au cours des déformations, les ondulations centripètes et ondulations centrifuges de cet élément-ressort intermédiaire se déplacent en sens opposé par rapport aux zones avec lesquelles elles sont en contact, respectivement feuille souple interne et ondulations centripètes de l'élément-ressort externe. Ce double déplacement relatif en sens opposé se traduit par une dissipation d'énergie maximum par effet de Coulomb et un effet d'amortissement de grande efficacité. L'invention permet donc d'obtenir simultanément les effets recherchés (variation progressive de raideur et amortissement élevé) avec un palier de structure simple sans ajout d'éléments supplémentaires par rapport à la plupart des paliers hydrodynamiques connus.

Par ailleurs, selon un mode de réalisation avantageux, l'élément-ressort intermédiaire comprend, entre deux ondulations centrifuges en contact avec l'élément-ressort externe, au moins deux ondulations centripètes en contact avec la feuille souple interne, ces ondulations centripètes étant séparées par des zones en retrait situées au repos à faible distance de la feuille souple interne.

Ces dispositions permettent de maîtriser parfaitement, d'une part, les variations de raideur de l'élément-ressort intermédiaire, d'autre part, l'effet d'amortissement produit par celui-ci, et ce de façon indépendante. En effet, comme on le comprendra mieux plus loin, il est possible d'ajuster, de façon précise et indépendante, la surface des zones en contact conditionnant l'effet d'amortissement et le positionnement de ces zones conditionnant la raideur et ses variations.

Le palier hydrodynamique conforme à l'invention peut comprendre un seul ensemble de soutien (composé d'une feuille interne, d'un élément-ressort intermédiaire et d'un élément-ressort externe tels que définis) qui s'étend sur toute la circonférence de l'espace annulaire entre fourreau et arbre rotatif.

Il peut également comprendre plusieurs ensembles de soutien identiques, s'étendant chacun sur un secteur de l'espace annulaire précité.

D'autres caractéristiques, buts et avantages de l'invention ressortiront de la description qui suit en référence aux dessins annexés, lesquels en présentent à titre non limitatif des exemples de réalisation ; sur ces dessins qui font partie intégrante de la présente description :
- la figure 1 est une coupe schématique par un plan transversal d'un palier hydrodynamique conforme à l'invention, équipé d'un seul ensemble de soutien,
- la figure 2 est une coupe partielle à échelle dilatée de ce palier,
- les figures 3a et 3b sont des schémas en coupe partielle illustrant le fonctionnement du palier respectivement sous faible charge et sous charge élevée,
- la figure 4 est une coupe analogue à celle de la figure 2 d'un autre mode de réalisation,
- la figure 5 est une coupe schématique d'un palier hydrodynamique conforme à l'invention, équipé sur sa circonférence de trois ensembles de soutien.

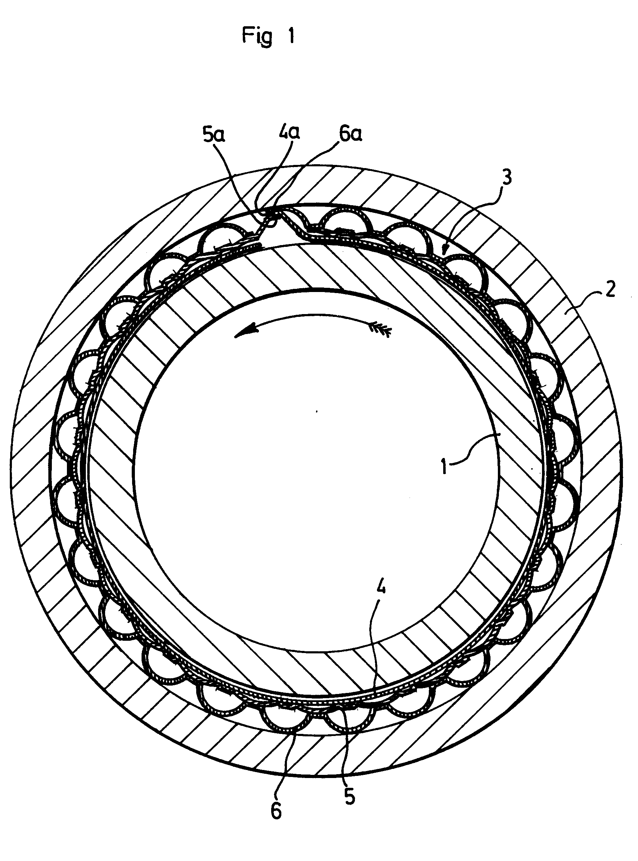

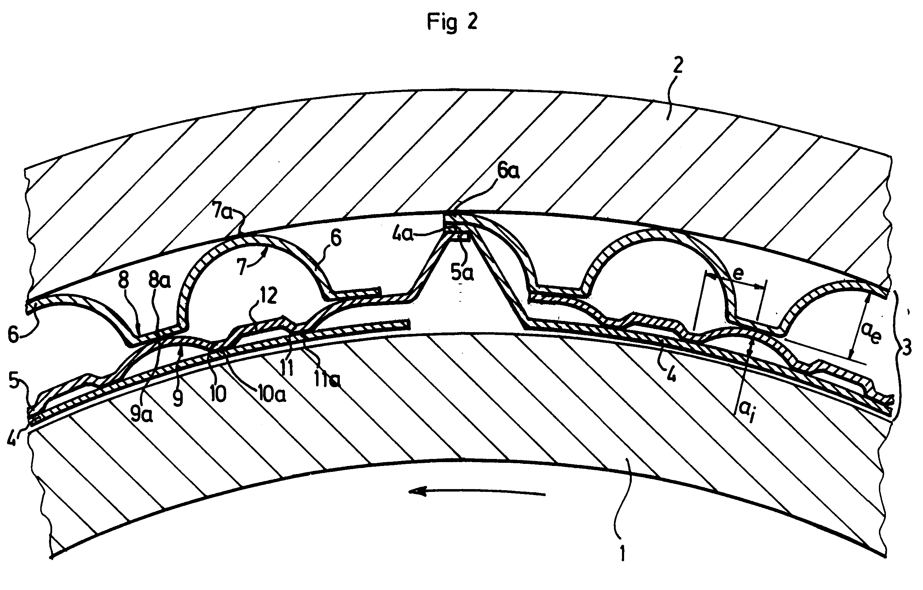

Le palier hydrodynamique représenté à titre d'exemple aux figures 1 et 2 est destiné au soutien d'un arbre rotatif 1 susceptible de tourner à des vitesses très élevées ; ce palier comprend un fourreau fixe 2 délimitant avec l'arbre 1 un espace annulaire dans lequel est logé un ensemble de soutien 3. Cet ensemble de soutien qui s'étend sous toute la circonférence du palier est adapté pour créer, en cours de fonctionnement, un film de fluide sous pression qui assure un soutien de l'arbre rotatif sans contact avec le palier.

L'ensemble de soutien 3 comprend une feuille interne souple 4 essentiellement cylindrique, dont l'épaisseur et l'élasticité lui confèrent une raideur faible appropriée pour lui permettre d'épouser la forme de l'arbre rotatif et d'assurer une portée optimale pour le fluide en phase de démarrage ou sous faible charge.

A l'arrière de cette feuille interne sont disposés un élément-ressort intermédiaire 5 et un élément-ressort externe 6 destinés à accroître la raideur de l'ensemble de soutien sous charge plus élevée et d'amortir les oscillations de l'arbre 1.

La feuille 4, l'élément-ressort intermédiaire 5 et l'élément-ressort externe 6 sont chacun immobilisés par une extrémité 4a, 5a, 6a qui est fixée notamment par soudage sur le fourreau 2. Les extrémités de fixation de ces trois éléments sont superposées comme le montrent les figures 1 et 2, mais le sens d'enroulement de l'élément-ressort intermédiaire 5 est opposé à celui de la feuille 4 et de l'élément-ressort externe 6 ; par exemple, l'élément-ressort intermédiaire 5 peut présenter un sens d'enroulement coïncidant avec le sens de rotation de l'arbre 1 (sens d'enroulement depuis l'extrémité fixe vers l'extrémité libre), les feuilles 4 et élément-ressort externe 6 s'enroulant en sens opposé. Ainsi, en cas de déformations, une zone donnée de l'élément-ressort intermédiaire 5 se déplace en sens opposé par rapport aux zones de la feuille 4 et de l'élément-ressort externe 6 qui sont situées en regard respectivement de part et d'autre de celle-ci.

L'élément-ressort externe 6 est constitué par une lame présentant une succession d'ondulations : ondulations centrifuges telles que 7 à convexité orientée vers le fourreau 2 et ondulations centripètes telles que 8 à convexité orientée vers l'arbre rotatif 1.

En l'exemple, les ondulations centrifuges 7 présentent la forme d'arcs de cercle (arcs proches de 180° en l'exemple représenté) et viennent au contact du fourreau 2 par leurs portions circulaires les plus externes 7a. Au contraire, en l'exemple visé, les ondulations centripètes 8 possèdent des zones aplaties 8a par lesquelles elles viennent au contact de l'élément-ressort intermédiaire 5.

L'élément-ressort intermédiaire 5 est constitué par une lame de raideur inférieure à celle de l'élément-ressort externe 6, présentant une succession d'ondulations : ondulations centrifuges telles que 9 à convexité orientée vers le fourreau et, entre deux ondulations centrifuges 9, ondulations centripètes 10 et 11 séparées par des zones en retrait 12. Ces zones en retrait 12 sont déportées vers l'extérieur et situées au repos à faible distance de la feuille souple interne 4. Pour clarifier la terminologie, ces zones 12 qui sont en fait des ondulations centrifuges, n'ont pas été désignées par ce terme en raison de leur fonction différente par rapport aux ondulations centrifuges 9 ; elles seront désignées dans la suite par "zone en retrait".

En l'exemple, les ondulations centrifuges 9 présentent la forme d'arcs de cercle (arcs proches de 70° en l'exemple représenté) et viennent au contact des zones aplaties 8a de l'élément-ressort externe par leurs portions circulaires les plus externes 9a. Les ondulations centripètes 10 et 11 (en l'exemple au nombre de deux entre deux ondulations centrifuges 9) possèdent des zones aplaties 10a et 11a par lesquelles elles viennent au contact de la feuille interne souple 4.

Au repos, l'amplitude aᵢ des ondulations de l'élément-ressort intermédiaire 5 est inférieure à celle aₑ des ondulations de l'élément-ressort externe 6 dont la raideur est plus élevée. Cet élément-ressort intermédiaire 5 est ainsi adapté pour se déformer progressivement lorsque la charge augmente à partir d'une faible valeur, et tendre à s'aplatir vers une forme cylindrique ; au cours de cette déformation, sa raideur croît (jusqu'à présenter une valeur élevée pour la forme proche de la forme cylindrique). A partir d'une certaine valeur de la charge, l'élément-ressort externe 6 se déforme à son tour et la raideur du palier est alors conditionnée par celui-ci. Ainsi, lorsque la charge croît, le palier conforme à l'invention voit sa raideur croître de façon continue depuis une valeur minimale réduite, appropriée pour favoriser le démarrage, jusqu'à une valeur maximale élevée, permettant au palier de supporter des charges élevées. La croissance de la raideur se fait de façon progressive sans discontinuité et ne compromet pas la stabilité du palier.

En outre, à chaque déformation, l'élément-ressort intermédiaire 5 se déplace en sens inverse par rapport à l'élément-ressort externe 6 et à la feuille souple 4, de sorte qu'une friction de Coulomb prend naissance, d'une part, au niveau des zones de contact 10a et 11a (contact des ondulations centripètes de l'élément-ressort intermédiaire 5 avec la feuille souple 4), d'autre part, au niveau des zones de contact 8a et 9a (contact des ondulations respectivement centrifuges et centripètes de l'élément-ressort intermédiaire et de l'élément-ressort externe).

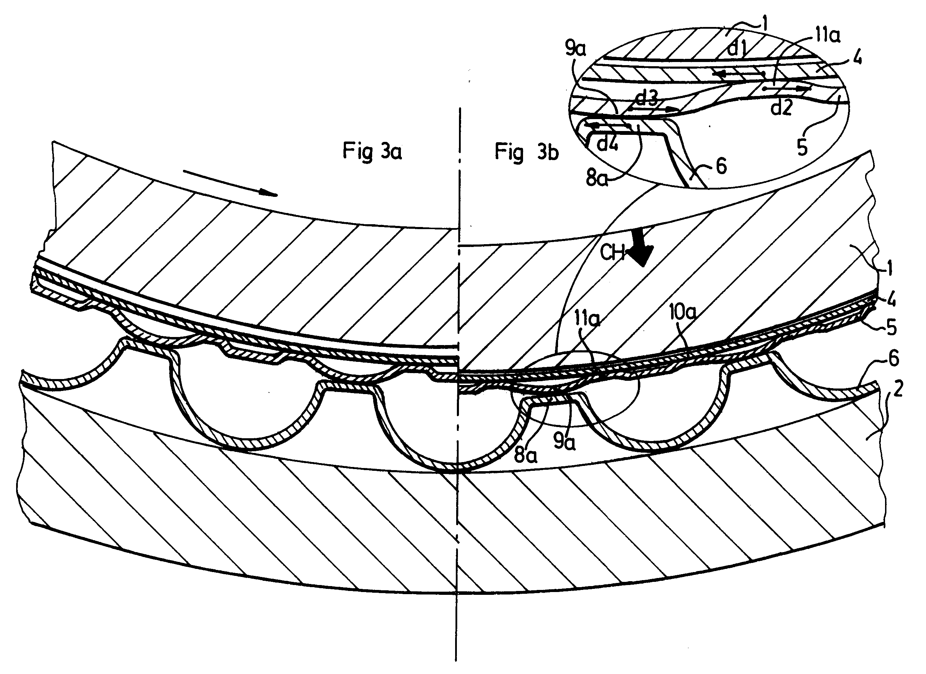

Les figures 3a et 3b illustrent une région donnée du palier au cours d'une oscillation ; celle-ci est soumise successivement à une charge faible (figure 3a) et à une charge élevée CH (figure 3b), et les déplacements des éléments 4, 5 et 6 ont été symbolisés sur le détail grossi en d₁, d₂, d₃, d₄ (déplacements correspondant à une augmentation de la charge, ces déplacements étant de sens opposé lors d'une diminution). Les phénomènes de frictions, considérablement accrus par les déplacements en sens opposé de l'ensemble des surfaces de contact, engendrent un effet d'amortissement remarquable des oscillations ou vibrations de l'arbre rotatif et, en liaison avec la raideur progressivement variable, une stabilité exceptionnelle du palier.

Il est à noter que la structure sus-décrite permet d'ajuster très aisément et de façon indépendante, d'une part, la raideur de l'élément-ressort intermédiaire et ses variations (conditionnées par le bras de levier -e- entre zones de contact 10a ou 11a où la charge s'applique et zones de contact 9a où elle est transmise), d'autre part, l'effet d'amortissement (conditionné par la taille des zones de contact 10a, 11a et 9a).

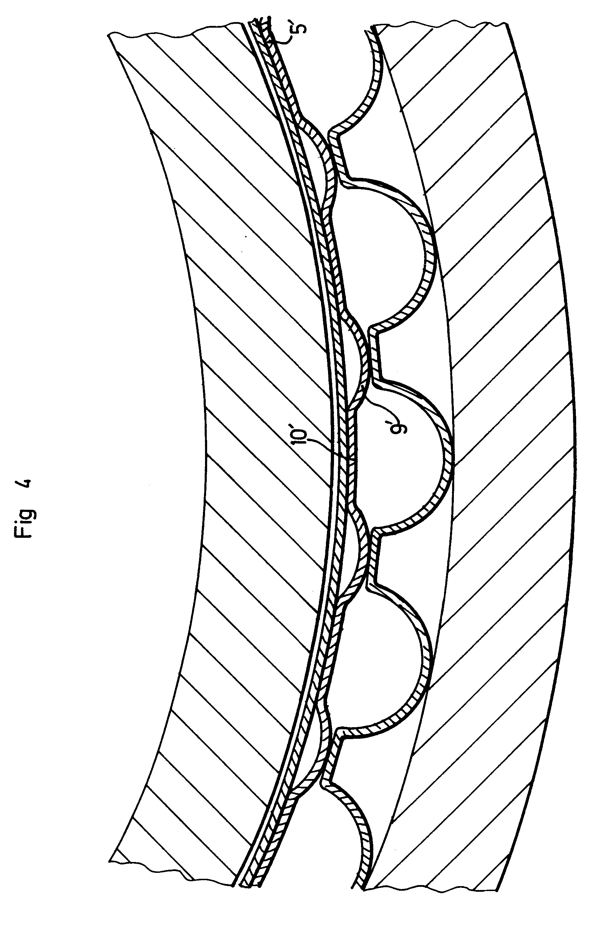

La figure 4 schématise en coupe partielle un autre mode de réalisation dans lequel l'élément-ressort intermédiaire 5′ ne comporte qu'une seule ondulation centripète 10′ entre deux ondulations centrifuges 9′. Les autres caractéristiques du palier sont identiques à celles du palier précédent. L'élément-ressort intermédiaire 5′ remplit la même double fonction que précédemment, mais le réglage de sa raideur et celui de l'amortissement sont interdépendants.

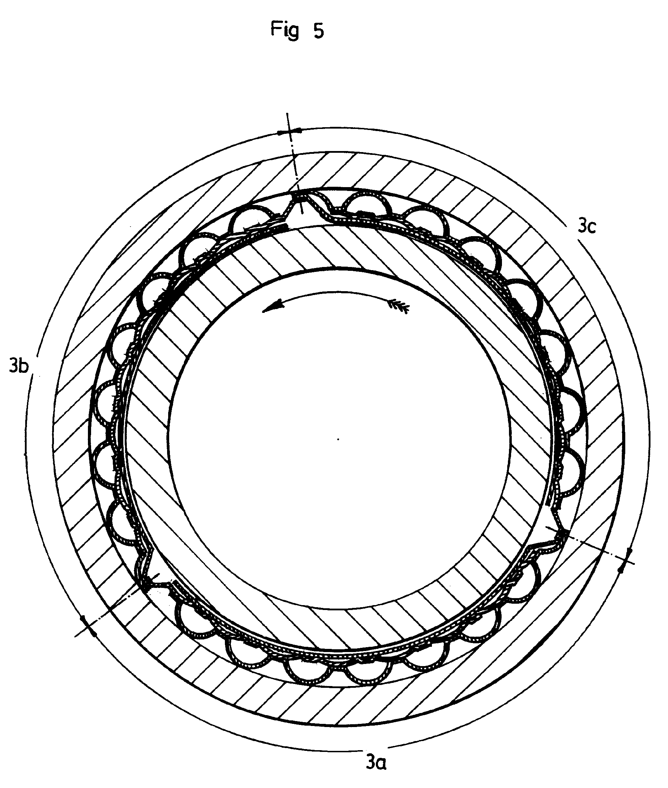

Le palier conforme à l'ivention peut comporter plusieurs ensembles de soutien s'étendant sur sa circonférence. La figure 5 montre un palier à trois ensembles 3a, 3b, 3c. Chaque ensemble de soutien s'étend sur un arc de 120° et une extrémité de ses feuille souple, élément-ressort intermédiaire et élément-ressort externe, est fixée comme précédemment dans le fourreau avec un sens d'enroulement opposé pour l'élément-ressort intermédiaire par rapport au sens d'enroulement des deux autres éléments.

## Revendications

1. Palier hydrodynamique à film fluide, du type comprenant un fourreau fixe (2), un arbre rotatif (1) disposé dans ledit fourreau de façon à être séparé de celui-ci par un espace annulaire, et un ou des ensembles de soutien (3) logés dans ledit espace de façon à couvrir la circonférence de celui-ci, chaque ensemble de soutien (3) comprenant la superposition :
. d'une feuille souple interne (4) essentiellement cylindrique, apte à conditionner la formation du film fluide entre l'arbre rotatif et ladite feuille,
. d'un élément-ressort externe (6) présentant une succession d'ondulations à convexité orientée vers le fourreau, dites ondulations centrifuges (7), et d'ondulations à convexité orientée vers l'arbre rotatif, dites ondulations centripètes (8), cet élément-ressort externe venant au contact du fourreau (2) par des ondulations centrifuges (7),
. et d'un élément-ressort intermédiaire (5), interposé entre la feuille souple interne (4) et l'élément-ressort externe (6) et présentant une succession d'ondulations à convexité orientée vers le fourreau, dites ondulations centrifuges (9), et d'ondulations à convexité orientée vers l'arbre rotatif, dites ondulations centripètes (10, 11), cet élément-ressort intermédiaire venant au contact de la feuille souple interne (4) par des ondulations centripètes (10, 11) et au contact de l'élément-ressort externe (6) par des ondulations centrifuges (9),
ledit palier hydrodynamique étant caractérisé en ce que, pour chaque ensemble de soutien :
. l'élément-ressort externe (6) et l'élément-ressort intermédiaire (5) ont des ondulations agencées en opposition de telle façon que les ondulations centripètes (8) de l'élément-ressort externe soient situées en regard et au contact des ondulations centrifuges (9) de l'élément-ressort intermédiaire,
. l'élément-ressort externe (6) et la feuille souple interne (4) possèdent une extrémité (6a, 4a) fixée au fourreau (2) et une extrémité libre, et présentent dans l'espace annulaire un même sens d'enroulement depuis leur extrémité fixe vers leur extrémité libre,
. l'élément-ressort intermédiaire (5) possède une extrémité (5a) fixée au fourreau et une extrémité libre, et présente dans l'espace annulaire un sens d'enroulement opposé à celui de l'élément-ressort externe (6) et de la feuille souple interne (4) de façon que les déformations de ces trois éléments engendrent des déplacements opposés de leurs zones en contact : ondulations centripètes (8) de l'élément-ressort externe au contact d'ondulations centrifuges (9) de l'élément-ressort intermédiaire d'une part, ondulations centripètes (10, 11) de l'élément-ressort intermédiaire au contact de la feuille souple interne (4) d'autre part.

2. Palier hydrodynamique selon la revendication 1, caractérisé en ce que l'élément-ressort intermédiaire (5) possède, d'une part, une raideur inférieure à celle de l'élément-ressort externe (6), d'autre part, des ondulations (9, 10, 11) d'amplitude (aᵢ) inférieure à celle (aₑ) des ondulations (7, 8) dudit élément-ressort externe.

3. Palier hydrodynamique selon l'une des revendications 1 ou 2, caractérisé en ce que l'élément-ressort intermédiaire (5) comprend, entre deux ondulations centrifuges (9) en contact avec l'élément-ressort externe (6), au moins deux ondulations centripètes (10, 11) en contact avec la feuille souple interne (4), ces ondulations centripètes étant séparées par des zones en retrait (12) situées au repos à faible distance de la feuille souple interne (4).

4. Palier hydrodynamique selon l'une des revendications 1, 2 ou 3, caractérisé en ce que :
. les ondulations centrifuges (7) de l'élément-ressort externe au contact du fourreau de même que les ondulations centrifuges (9) de l'élément-ressort intermédiaire au contact de l'élément-ressort externe présentent la forme d'arcs de cercle,
. les ondulations centripètes (8) de l'élément-ressort externe de même que les ondulations centripètes (10, 11) de l'élément-ressort intermédiaire présentent des zones aplaties de contact respectivement avec l'élément-ressort intermédiaire et la feuille souple interne.

5. Palier hydrodynamique selon l'une des revendications 1 2, 3 ou 4, comprenant un seul ensemble de soutien (3) s'étendant sur toute la circonférence de l'espace annulaire entre fourreau et arbre rotatif.

6. Palier hydrodynamique selon l'une des revendications 1, 2, 3 ou 4, comprenant plusieurs ensembles de soutien identiques (3a, 3b, 3c), s'étendant chacun sur un secteur de l'espace annulaire entre fourreau et arbre rotatif.

## Patentansprüche

1. Hydrodynamisches Flüssigkeitsfilmlager der Art umfassend einen festen Mantel (2), eine Drehwelle (1), die in dem besagten Mantel so angeordnet ist, daß sie von diesem durch einen ringförmigen Raum getrennt ist, und eine oder mehrere Stützgruppen (3), die in dem besagten Raum so angeordnet sind, daß sie dessen Umfang bedecken, wobei jede Abstützgruppe (3) die folgenden Teile in übereinander angeordneter Form umfaßt:
. eine im wesentlichen zylindrische flexible Innenschicht (4), die so beschaffen ist, daß sie die Bildung des Flüssigkeitsfilms zwischen der Drehwelle und der besagten Schicht bedingt.
. ein äußeres Federelement (6) mit einer Reihe von Wellungen, sogenannten Zentrifugalwellungen (7), deren Wölbungen auf den Mantel zu gerichtet sind, und Wellungen, sogenannten Zentripetalwellungen (8), deren Wölbungen auf die Drehwelle zu gerichtet sind, wobei das besagte äußere Federelement durch die Zentrifugalwellungen (7) mit dem Mantel in Kontakt kommt,
. und ein mittleres Federelement (5), das zwischen der flexiblen Innenschicht (4) und dem äußeren Federelement (6) eingeschaltet ist, mit einer Reihe von Wellungen, sogenannten Zentrifugalwellungen (9), deren Wölbungen auf den Mantel zu gerichtet sind, und Wellungen, sogenannten Zentripetalwellungen (10, 11), deren Wölbungen auf die Drehwelle zu gerichtet sind, wobei das besagte mittlere Federelement mit der flexiblen Innenschicht (4) durch Zentripetalwellungen (10, 11) und mit dem äußeren Federelement (6) durch die Zentrifugalwellungen (9) in Kontakt kommt,
und zwar ist das besagte hydrodynamische Lager dadurch gekennzeichnet, daß bei jeder Abstützgruppe:
. das äußere Federelement (6) und das mittlere Federelement (5) einander gegenüber angeordnete Wellungen aufweisen, so daß sich die Zentripetalwellungen (8) des äußeren Federelements gegenüber und in Kontakt mit den Zentrifugalwellungen (9) des mittleren Federelements befinden,
. das äußere Federelement (6) und die flexible Innenschicht (4) ein an dem Mantel (2) angebrachtes Ende (6a, 4a) sowie ein freies Ende umfassen und in dem ringförmigen Raum die gleiche Abrollrichtung von ihrem festen Ende zu ihrem freien Ende aufweisen,
. das mittlere Federelement (5) ein an dem Mantel angebrachtes Ende (5a) und ein freies Ende besitzt und in dem ringförmigen Raum eine Abrollrichtung aufweist, die der des äußeren Federelements (6) und der flexiblen Innenschicht (4) entgegengesetzt ist, so daß die Verformungen dieser drei Elemente entgegengesetzte Verlagerungen ihrer in Kontakt befindlichen Zonen - Zentripetalwellungen (8) des äußeren Federelements in Kontakt mit Zentrifugalwellungen (9) des mittleren Federelements einerseits und Zentripetalwellungen (10, 11) des mittleren Federelements in Kontakt mit der flexiblen Innenschicht (4) andererseits - bewirken.

2. Hydrodynamisches Lager nach Anspruch 1, dadurch gekennzeichnet, daß einerseits die Steifheit des mittleren Federelements (5) geringer ist als die des äußeren Federelements (6) und andererseits die Amplitude (aᵢ) der Wellungen (9, 10, 11) geringer ist als die Amplitude (aₑ) der Wellungen (7, 8) des besagten äußeren Federelements.

3. Hydrodynamisches Lager nach einem der Ansprüche 1 oder 2, dadurch gekennzeichnet, daß das mittlere Federelement (5) zwischen zwei mit dem äußeren Federelement (6) in Kontakt befindlichen Zentrifugalwellungen (9) mindestens zwei mit der flexiblen Innenschicht (4) in Kontakt befindliche Zentripetalwellungen (10, 11) umfaßt, wobei die besagten Zentripetalwellungen durch zurückweichende Zonen (12) getrennt sind, die sich im Zustand der Ruhe in geringem Abstand von der flexiblen Innenschicht befinden.

4. Hydrodynamisches Lager nach einem der Ansprüche 1, 2 oder 3, dadurch gekennzeichnet, daß:
. die mit dem Mantel in Kontakt befindlichen Zentrifugalwellungen (7) des äußeren Federelements ebenso wie die mit dem äußeren Federelement in Kontakt befindlichen Zentrifugalwellungen (9) des mittleren Federelements kreisbogenförmig sind,
. die Zentripetalwellungen (8) des äußeren Federelements ebenso wie die Zentripetalwellungen (10, 11) des mittleren Federelements abgeflachte Zonen zum Kontakt mit dem mittleren Federelement beziehungsweise der flexiblen Innenschicht aufweisen.

5. Hydrodynamisches Lager nach einem der Ansprüche 1, 2, 3 oder 4, umfassend eine einzige Abstützgruppe (3), die sich über den gesamten Umfang des ringförmigen Raumes zwischen dem Mantel und der Drehwelle erstreckt.

6. Hydrodynamisches Lager nach einem der Ansprüche 1, 2, 3 oder 4, umfassend mehrere identische Abstützgruppen (3a, 3b, 3c), die sich jede innerhalb eines Sektors des ringförmigen Raumes zwischen dem Mantel und der Drehwelle erstrecken.

## Claims

1. Hydrodynamic fluid-film bearing of the type comprising a fixed casing (2), a rotary shaft (1) arranged within said casing so as to be separated from the latter by an annular space, and one or several supporting assemblies (3) located within said space so as to cover the circumference of the latter, whereby each supporting assembly (3) comprises the superposition of:
. a flexible internal sheet (4) which is substantially cylindrical and capable of conditioning the formation of the fluid film between the rotary shaft and said sheet,
. an external spring element (6) exhibiting a series of ondulations, so-called centrifugal ondulations (7), the convexity of which is oriented towards the casing, and ondulations, so-called centripetal ondulations (8), the convexity of which is oriented towards the rotary shaft, whereby said external spring element abuts the casing (2) by virtue of the centrifugal ondulations (7),
. and an intermediary spring element (5) interposed between the flexible internal sheet (4) and the external spring element (6), said intermediary spring element exhibiting a series of ondulations, so-called centrifugal ondulations (9), the convexity of which is oriented towards the casing, and ondulations, so called centripetal ondulations (10, 11), the convexity of which is oriented towards the rotary shaft, whereby said intermediary spring element abuts the flexible internal sheet (4) by virtue of the centripetal ondulations (10, 11) and abuts the external spring element (6) by virtue of the centrifugal ondulations (9),
said hydrodynamic bearing being characterised in that, for each supporting assembly:
. the external spring element (6) and the intermediary spring element (5) have ondulations arranged in opposition in such a way that the centripetal ondulations (8) of the external spring element are situated opposite the centrifugal ondulations (9) of the intermediary spring element and are in contact with said centrifugal ondulations,
. the external spring element (6) and the internal flexible sheet (4) have an end (6a, 4a) secured to the casing (2) and a free end and exhibit within the annular space an identical winding direction from their fixed end towards their free end,
. the intermediary spring element (5) has an end (5a) secured to the casing and a free end and exhibits within the annular space a winding direction opposite to that of the external spring element (6) and of the flexible internal sheet (4) so that the deformations of these three elements give rise to opposite displacements of their contact zones,- i.e. centripetal ondulations (8) of the external spring element in contact with centrifugal ondulations (9) of the intermediary spring element on the one hand, and centripetal ondulations (10, 11) of the intermediary spring element in contact with the flexible internal sheet (4) on the other hand.

2. Hydrodynamic bearing according to Claim 1, characterised in that the-intermediary spring element (5) has, on the one hand, a stiffness which is less than that of the external spring element (6), and on the other hand ondulations (9, 10, 11) with an amplitude (aᵢ) which is less than the amplitude (aₑ) of the ondulations (7, 8) of said external spring element.

3. Hydrodynamic bearing according to one of Claims 1 or 2, characterised in that the intermediary spring element (5) comprises, between two centrifugal ondulations (9) in contact with the external spring element (6), at least two centripetal ondulations (10, 11) in contact with the flexible internal sheet (4), said centripetal ondulations being separated by retracted zones (12) which in a state of rest are located at a small distance from the flexible internal sheet (4).

4. Hydrodynamic bearing according to one of Claims 1, 2 or 3, characterised in that:
. the centrifugal ondulations (7) of the external spring element in contact with the casing as well as the centrifugal ondulations (9) of the intermediary spring element in contact with the external spring element take the shape of circular arcs,
. the centripetal ondulations (8) of the external spring element exhibit, in the same way as the centripetal ondulations (10, 11) of the intermediary spring element, flattened zones of contact with the intermediary spring element and the flexible internal sheet respectively.

5. Hydrodynamic bearing according to one of Claims 1, 2, 3 or 4, comprising a single supporting assembly (3) extending over the whole circumference of the annular space between the casing and the rotary shaft.

6. Hydrodynamic bearing according to one of Claims 1, 2, 3 or 4, comprising several identical supporting assemblies (3a, 3b, 3c), each of which extends over a sector of the annular space between the casing and the rotary shaft.
